# EUROPÄISCHE PATENTANMELDUNG

(11) **EP 1 675 045 A1**
(43) Veröffentlichungstag der Anmeldung: **28.06.2006**
(21) Anmeldenummer: 04030322.4
(22) Anmeldetag: 21.12.2004
(51) Int. Cl.: G06Q 10/00

(54) **Austausch von Beschreibungsdaten zwischen Projekten mit Hilfe von Inter-Project-Interfaces**

(71) Anmelder: SIEMENS AKTIENGESELLSCHAFT, 80333 München (DE)
(72) Erfinder: Gikas, Diamantis, 90473 Nürnberg (DE); Lange, Ronald, 90766 Fürth (DE); Leins, Ralf, 75228 Ispringen (DE); Meusser, Klaus, 90768 Fürth (DE); Schmoll, Jürgen, 91801 Markt Berolzheim (DE); Weinländer, Markus, 91230 Happurg (DE)

(57) **Zusammenfassung**

Die Erfindung betrifft ein System und ein Verfahren zum Austausch von anwendungsorientierten Beschreibungsdaten zwischen Projekten, insbesondere zwischen Engineering-Projekten im Automatisierungsumfeld. Es wird eine effiziente und sichere Möglichkeit zum Austausch von Beschreibungsdaten, insbesondere von anwendungsorientieren Engineeringdaten zwischen Teilprojekten gegeben. Eine Speicherung und ein anschließender Austausch relevanter Beschreibungsdaten von Objekten all derjenigen Informationen, welche für die Kommunikation zwischen Teilprojekten benötigt werden, werden mittels des Systems und des Verfahrens sichergestellt. Die gemeinsame Speicherung der Beschreibungsdaten erfolgt in sogenannten Inter-Project-Interfaces (IPI).

## Beschreibung

Die Erfindung betrifft ein System und ein Verfahren zum Austausch von anwendungsorientierten Beschreibungsdaten zwischen Projekten, insbesondere zwischen Engineering-Projekten im Automatisierungsumfeld.

Komplexe Automatisierungslösungen werden heutzutage in der Regel in mehreren Projekten oder Teilprojekten von parallel arbeitenden Teams entwickelt. Hierbei kann sogar eine Aufteilung der Entwicklungsarbeit zwischen verschiedenen Unternehmen, welche beispielsweise als Subunternehmer fungieren, erfolgen. In der Regel werden derartige Projekte nur locker miteinander verknüpft. Es besteht jedoch eine Notwendigkeit, Daten, die bestimmte übergreifend relevante Eigenschaften von Objekten beschreiben zwischen den einzelnen Teilprojekten reibungslos zu kommunizieren, damit die parallele Entwicklung reibungslos durchgeführt werden kann. Bei den relevanten Eigenschaften bzw. der Daten kann es sich beispielsweise um Netzwerkadressen handeln, die für alle Teilprojekte gleich sind. Die notwendige Synchronisation kann hierbei in gemeinsamer Arbeit erfolgen. Die verschiedenen Teams synchronisieren und aktualisieren ihre eigenen, für ihr Teilprojekt relevanten Daten. In einem anderen Modell kann die Synchronisation beispielsweise durch eine zentrale Stelle, welche die Teilprojekte koordiniert, erfolgen. Im letzteren Fall empfangen die Subkontraktoren bzw. die einzelnen Teilprojekte die übergreifend relevanten und damit feststehenden Daten für die Programmierung der ihnen zugewiesenen Teile.

Im Allgemeinen existiert im Rahmen entsprechenden Szenarien keine gemeinsame Datenbasis bzw. kein gemeinsamer Speicher für das Projekt. Die Gründe hierfür sind u.a. das Fehlen einer gemeinsam zu verwendeten Datenbank oder eine unzureichende Infrastruktur wie mangelnder oder langsamer Netzzugang. Für diese Entwicklungsszenarien existiert somit heutzutage keine vernünftige Unterstützung, so dass die im Rahmen des Engineering relevanten Daten für die Teilprojekte effizient verwaltet und genutzt werden können. Die Benutzer haben dementsprechend heutzutage zwei Möglichkeiten: Sie können nach definierten Regeln arbeiten und versuchen, die niedergeschriebenen Regeln einzuhalten, oder sie nutzen die "kopieren/einfügen" Möglichkeit, um Projektdaten auszutauschen.

Die Aufgabe der vorliegenden Erfindung besteht daher darin, eine Möglichkeit zum Austausch von Beschreibungsdaten, insbesondere anwendungsorientiere Engineeringdaten zwischen Teilprojekten effizient und sicher zu ermöglichen.

Die Aufgabe wird gelöst durch ein System zum Austausch von Beschreibungsdaten zwischen Projekten, insbesondere zwischen Engineering-Projekten im Automatisierungsumfeld, mit einer ersten Projektierumgebung zum Erstellen eines ersten Teilprojekts, mindestens einer zweiten Projektierumgebung zum Erstellen mindestens eines zweiten Teilprojekts, Speichermitteln zum Speichern von für die mindestens zwei Teilprojekte relevanten Beschreibungsdaten, wobei die Speicherung der Beschreibungsdaten durch die erste Projektierumgebung und ein Auslesen der gespeicherten Beschreibungsdaten durch die zweite Projektierumgebung vorgesehen ist.

Der Erfindung liegt die Erkenntnis zugrunde, dass durch eine Speicherung und den anschließenden Austausch relevanter Beschreibungsdaten von Objekten alle diejenigen Informationen, welche für die Kommunikation zwischen Teilprojekten benötigt werden, vorliegen. Die gemeinsame Speicherung der Beschreibungsdaten erfolgt in sogenannten Inter-Project-Interfaces (IPI).

Zu den in verschiedenen Teilprojekten vorliegenden Informationen, welche in den jeweiligen Teilprojekten identisch sein müssen, gehören beispielsweise sogenannte Tags. Um beispielsweise den Datenaustausch oder Verbindungen zwischen einem Bedien- und Beobachtungssystem, einem MES-System und einem Controls-System zu etablieren, werden die Datentypen, symbolische Namen und Pfade all jener globalen Tags im IPI gespeichert, welche von den beteiligten Teilprojekten benötigt werden.

Bei den gespeicherten Daten handelt es sich beispielsweise um die in mehreren Projekten relevanten Eigenschaften von Objekten. Es wird in den IPIs somit nicht das ganze Objekt, sondern nur ein Teil seiner Eigenschaften gespeichert. Hierbei weisen die gespeicherten Beschreibungsdaten eine eindeutige Identität, eine sogenannte Master ID auf. Mittels der Identität können die entsprechenden Beschreibungsdaten rückverfolgt und aktualisiert werden. Dies ist auch bei Generierung meherer IPIs im Rahmen einer Kaskade von Teilprojekten möglich, so dass die relevanten Beschreibungdaten aller beteiligten Projekte immer aktuell und alle auf dem gleichen Stand sind. Eine Aktualisierung wird hierbei mit Hilfe von Zeitstempeln durchgeführt.

In den IPI's werden als Beschreibungsdaten auch Alarme gespeichert. Um beispielsweise Alarme, welche von einer Steuerung generiert werden, an ein Bedien- und Beobachtungselement (HMI-Element) zu übergeben, müssen die Informationen über die Definition des Alarms Teil des IPI sein, damit sie von beiden Teilprojekten gleich interpretiert werden. Weiterhin gehören zu den Beschreibungsdaten sogenannte Functionblock-Interfaces. Sie unterstützen beispielsweise das Aufrufen einer Prozedur bzw. einer Funktion von Ferne.

Um beispielsweise unterschiedliche Geräte an das gleiche Netzwerk anzuschließen, muss gewährleistet sein, dass die jeweiligen Adressen klar angegeben sind und eine direkte Zuordnung der Adressen zum jeweiligen Gerät muss garantiert sein. Hierzu müssen die Adressen ebenfalls in den verschieden Teilprojekten gleich sein, so dass ein Vertauschen der Adressen vermieden wird. Aus diesem Grund sollten beispielsweise Netzwerkadressen und weitere Parameter der Geräte, die im Rahmen des Netzwerks relevant sind, als Beschreibungsdaten in den IPI's gespeichert sein.

Im Rahmen einer vollständigen Automatisierungslösung müssen beispielsweise einige Geräte bzw. Teile von Geräten oder auch die technologische Hierarchie der Geräte untereinander einheitlich und eindeutig sein. Dies ist notwendig, damit eine eindeutige Zuordnung der Geräte selbst und ihre Platzierung in der technologischen Hierarchie erfolgen können. Aus diesem Grund ist es vorteilhaft, wenn die Projektstruktur bezogen auf die Geräte und die technologische Hierarchie ebenfalls in Form von Beschreibungsdaten gespeichert und somit Teil des IPI wird.

Vorteilhafter Weise ermöglicht das IPI durch die Speicherung der Beschreibungsdaten eine zügige und reibungslose Integration von zwei oder auch mehr unabhängig voneinander entwickelten Teilprojekten. Aus diesem Grund ist es nötig, neben den symbolischen Namen, beispielsweise auch die physikalische Adresse oder Referenzen auf Tag, Alarme und andere Objekte zu speichern. Die Verwendung der IPI's als Speicher für die Beschreibungsdaten erlaubt eine Form des "Plug & Play" für unterschiedliche Teile einer entstehenden Automatisierungslösung. Dem Engineer bzw. den Entwicklern in einzelnen Teilprojekten wird durch die Nutzung der gespeicherten Beschreibungsdaten die Erstellung einer entsprechenden Engineering-Lösung enorm erleichtert. Um einen einfachen Informationsaustausch zu ermöglichen, können beispielsweise die gespeicherten Beschreibungsdaten, also die IPI's in einer relativ kleinen Datei gespeichert und beispielsweise über E-Mail, gemeinsame Laufwerke oder auch über USB-Stick ausgetauscht werden.

Insgesamt wird durch das erfindungsgemäße System ein paralleles Arbeiten mit unabhängigen Projekten ermöglicht. Relevante Informationen wie Projekt-Struktur, Netzwerkdaten, Meldungen und Symboldefinitionen können gekennzeichnet werden und stehen den beteiligten Projekten einheitlich über Mail oder andere Kommunikationsmittel zur Verfügung. Mithilfe der Identität, die die Informationen haben, können diese zwischen den Projekten ausgetauscht und auch aktualisiert werden.

Weitere vorteilhafte Ausbildungen der Erfindung sind in den Unteransprüchen angegeben.

Im Folgenden ist die Erfindung anhand der in den Figuren dargestellten Ausführungsbeispiele näher beschrieben und erläutert. Es zeigen:
- FIG 1: eine schematische Übersicht über das System zum Austausch von Beschreibungsdaten,
- FIG 2: eine Darstellung der importierten Beschreibungsdaten in einem Teilprojekt,
- FIG 3: die Repräsentation eines Objekts in einem Teilprojekt,
- FIG 4: die Verschmelzung eines Objekts und seines entfernten Ursprungsobjekts zur Runtime.

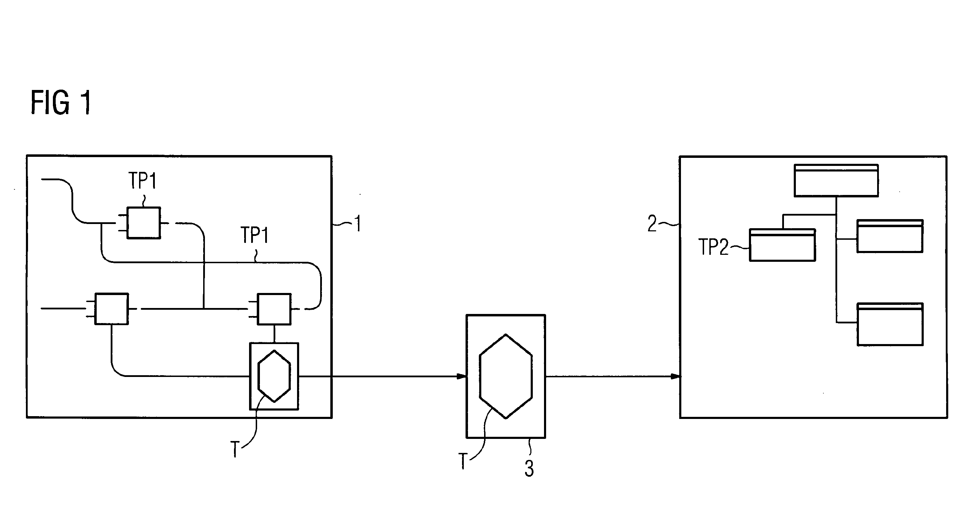

FIG 1 zeigt ein System zum Austausch von Beschreibungsdaten, welche in einem sogenannten IPI-File 3 gespeichert werden. Beispielsweise werden in einem ersten Teilprojekt TP1, welches in einer ersten Projektierumgebung 1 erzeugt wird, für das gesamte Projekt relevante Beschreibungsdaten, also beispielsweise Tag-Definitionen T in dem IPI-File 3 gespeichert. Die Beschreibungsdaten sind beispielsweise die Eigenschaften bzw. Attribute eines Objektes. Hierbei ist beispielsweise das erste Teilprojekt TP1 im Umfeld der Programmierung von Steuerungen für ein Automatisierungsprojekt, also ein Controls-Projekt, angesiedelt. Das zweite Teilprojekt TP2 ist beispielsweise verantwortlich für die Bereiche des Bedien- und Beobachtungssystems. Um die Bedien- und Beobachtungselemente entsprechend der Projektstruktur zu projektieren, benötigt das HMI-Projekt Informationen über die Tag-Definitionen des Teilprojektes, welches im Controls-Umfeld angesiedelt ist. Hierzu wird im ersten Teilprojekt TP1 ein IPI kreiert, welches die benötigte Tag-Information enthält. Das IPI wird in einer Datei gespeichert, dem IPI-File 3 und an das zweite Teilprojekt TP2 übergeben. Die Übergabe erfolgt beispielsweise mittels E-Mail oder über einen USB-Stick. Das IPI-File 3 wird hierbei vom ersten Teilprojekt TP1 durch einen Datenexport generiert. Vom zweiten Teilprojekt TP2 erfolgt anschließend in der Projektierumgebung 2 ein Import der relevanten Beschreibungsdaten des IPI-Files.

Die relevanten Beschreibungsdaten besitzen eine eindeutige Identität, eine Master ID, auf deren Basis sie auch nach Modifikation eindeutig zugeordnet werden können. Eine Änderung der Daten in einem Teilprojekt kann auf Basis der Identität mit Hilfe von beispielsweise Zeitstempeln durchgeführt werden. Jeweils der aktuellste Wert wird in den Projekten von den Beschreibungsdaten angenommen, wenn eine Aktualisierung erfolgt.

Neben dem oben ausgeführten Beispiel können im Rahmen größerer Entwicklungsvorhaben auch mehrere Teilprojekte über eine Mehrzahl von IPIs mit den für sie relevanten Beschreibungsdaten versorgt werden. Hierbei kann eine Kette von Teilprojekten mit einer zugehörigen Kette von IPIs generiert werden. Eine Aktualisierung und ein Abgleich der relevanten Beschreibungsdaten zwischen Teilprojekten gleicher Hierarchie oder auch zwischen Projekten und untergeordneten Sub-Projekten, beispielsweise eines Subunternehmers, erfolgt auch hierbei durch die eindeutige Identität und die Verwendung von Zeitstempeln.

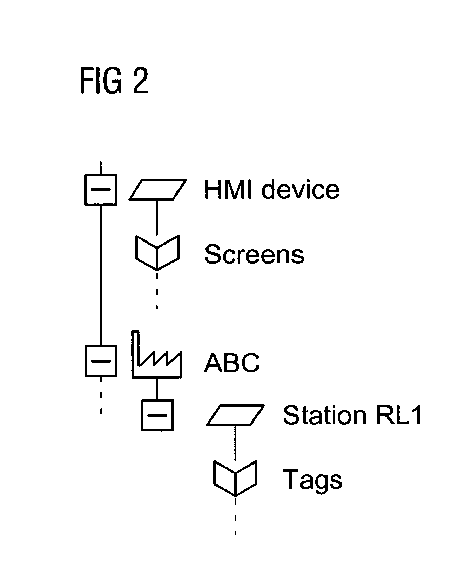

FIG 2 stellt dar, wie das importierte IPI-File im zweiten Teilprojekt TP2 repräsentiert wird. Hierzu ist im Projekt Navigator des zweiten Teilprojekts TP2 eine zusätzliche Funktion implementiert, welche die Darstellung der importierten Beschreibungsdaten, beispielsweise der Tagdefinition in der Struktur des zweiten Teilprojekts TP2 ermöglicht. Dies kann beispielsweise in Form einer gängigen Baumstruktur zur Anzeige bzw. Darstellung der Projektstruktur bzw. der Elemente des Projekts erfolgen. Hierbei werden in die Struktur des zweiten Teilsprojekts TP2 die relevanten Beschreibungsdaten einfach eingehängt. Damit besitzt das zweite Teilprojekt TP2 nunmehr eine entfernte Station, beispielsweise RL1 und die dazu gehörigen Tags des ersten Teilprojekts.

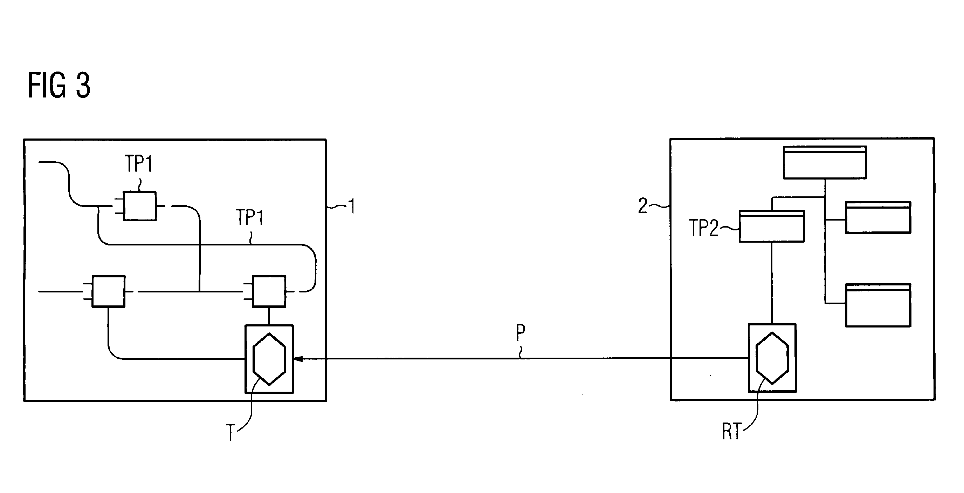

FIG 3 stellt die Repräsentation des entfernten Objekts aus dem ersten Teilprojekt TP1 im zweiten Teilprojekt TP2 dar. Hierbei kann in dem zweiten Teilprojekt TP2 auf das entfernte Objekt referenziert werden, wie auf jeden anderen Tag, der beispielsweise ausschließlich im zweiten Teilprojekt TP2 relevant wäre. Der entfernte Tag RT bzw. das entfernte Objekt hat eine Referenz P zu seinem Ursprungsobjekt. Durch diese Referenz wird beispielsweise ermöglicht, Funktionen zu aktualisieren, ohne die Referenzen oder Änderungen die in einem Projekt gemacht werden, zu verlieren. Die originären Tag-Informationen können somit aktualisiert werden, ohne dass die im zweiten Teilprojekt durchgeführten Arbeiten behindert werden.

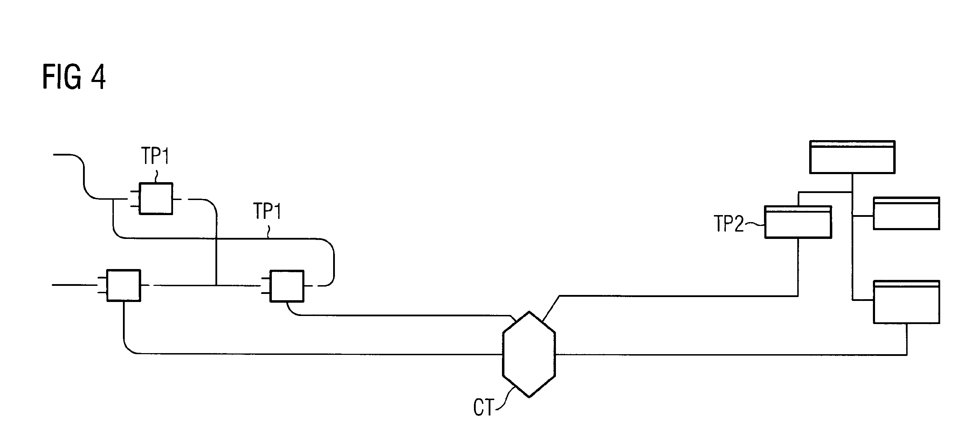

FIG 4 zeigt das Verschmelzen des entfernten Objekts mit dem Originalobjekt bei Ausführung des Projektes zur Laufzeit. Hierbei wird aus den beiden Objekten ein einzelnes Objekt CT. Dieses Objekt ist in beiden Teilprojekten, beispielsweise dem Projekt zur Entwicklung einer Automatisierungslösung im Umfeld von Steuerungen und dem Projekt für die Bedien- und Beobachtung der Automatisierungslösung repräsentiert. Die Verschmelzung des entfernten Objekts RT mit dem Originalobjekt T erfolgt ebenfalls, wenn die beiden Teilprojekte TP1, TP2 im Rahmen der Entwicklung bzw. des Engineering-Prozesses kombiniert werden. Somit erfolgt eine Verschmelzung ebenfalls in der Engineering-Version des entsprechenden Projektes.

Die Erstellung von IPI's im Rahmen eines Teilprojektes ist für den Benutzer einfach. Beispielsweise muss ein Benutzer im Rahmen eines Controls-Projektes nur kenntlich machen, welche der Tags bzw. Alarme oder sonstige Überparameter für ein anderes Projekt, beispielsweise ein HMI-Projekt relevant sind. Das IPI-File, welches die entsprechenden Beschreibungsdaten enthält, wird anschließend automatisch auf Knopfdruck erzeugt. Dies kann beispielsweise realisiert werden, in dem jedes Tag ein Attribut, beispielsweise HMI-relevant oder Public oder global bekommt, welches beispielsweise auch grundsätzlich gesetzt sein kann. Wird es nicht benötigt bzw. handelt es sich nicht um einen globalen Beschreibungsdaten, der in das IPI überführt werden soll, so kann das Attribut, beispielsweise das Flag vom Benutzer entfernt werden.

Im Rahmen des entsprechenden Systems werden die Beschreibungsdaten anschließend durch eine Funktion, beispielsweise "File > Export-Interfaces" in das entsprechende IPI geschrieben. Die Objekte, welche auf das IPI-File geschrieben wurden, sind im Originalprojekt noch präsent. Hier können sie auch verändert werden. Im Teilprojekt dagegen existiert nur das entfernte Objekt, welches das Originalobjekt repräsentiert. Das entfernte Objekt kann durch den Benutzer, wenn er wieder ein IPI-File generiert, aktualisiert werden. Das Originalobjekt kann nur im Ursprungsobjekt aktualisiert werden.

## Patentansprüche

1. System zum Austausch von anwendungsorientierten Beschreibungsdaten zwischen Projekten, insbesondere zwischen Engineering-Projekten im Automatisierungsumfeld, mit
• einer ersten Projektierumgebung (1) zum Erstellen eines ersten Teilprojekts (TP1),
• mindestens einer zweiten Projektierumgebung (2) zum Erstellen mindestens eines zweiten Teilprojekts (TP2),
• Speichermitteln (3) zum Speichern von für die mindestens zwei Teilprojekte (TP1, TP2) relevanten Beschreibungsdaten, wobei die Speicherung der Beschreibungsdaten durch die erste Projektierumgebung (1) und ein Auslesen der gespeicherten Beschreibungsdaten durch die zweite Projektierumgebung (2) vorgesehen ist.

2. System nach Anspruch 1, bei dem die Beschreibungsdaten als Attribute mindestens eines Objekts ausgebildet sind, wobei eine bestimmbare Auswahl von Attributen eines Objekts als relevante Beschreibungsdaten definierbar ist.

3. System nach Anspruch 1 oder 2, bei dem ein Export der relevanten Beschreibungsdaten in die Speichermittel (3) durch die erste Projektierumgebung vorgesehen ist und/oder bei dem ein Import der relevanten Beschreibungsdaten aus den Speichermitteln (3) durch die zweite Projektierumgebung vorgesehen ist.

4. System nach einem der Ansprüche 1 bis 3, bei dem die relevanten Beschreibungsdaten eine Identität aufweisen und zur Nachverfolgung vorgesehen sind.

5. System nach einem der Ansprüche 1 bis 4, bei dem die Speichermittel (3) als Datei ausgebildet sind, wobei die Datei zur Speicherung auf einer Diskette und/oder einem USB-Stick vorgesehen ist.

6. System nach einem der vorhergehenden Ansprüche, bei dem die zweite Projektierumgebung (2) Navigationsmittel (4) zur Darstellung des zweiten Teilprojektes (TP2), insbesondere in Form einer Baumstruktur, aufweist, wobei die Navigationsmittel (4) zur Anzeige der importierten Beschreibungsdaten vorgesehen sind.

7. System nach einem der vorhergehenden Ansprüche, bei dem die Beschreibungsdaten als Tags, Alarme, Funktionsblock-Schnittstellen, Netzadressen und/oder Projekt-Strukturen ausgebildet sind, wobei die Beschreibungsdaten durch eine physikalische Adresse und/oder einen symbolischen Namen und/oder durch Attribute beschreibbar sind.

8. System nach einem der vorhergehenden Ansprüche, bei dem weitere Speichermittel (3x) für die Speicherung von relevanten Beschreibungsdaten für weitere Teilprojekte (TPx) vorgesehen sind, wobei die Speicherung aus dem ersten Teilprojekt (TP1), dem zweiten Teilprojekt (TP2) und/oder aus jedem weiteren Teilprojekt (TPx) heraus erfolgen kann.

9. System nach einem der vorhergehenden Ansprüche, bei dem Mittel zum Aktualisieren der Beschreibungsdaten auf Basis der Identität vorgesehen sind.

10. System nach Anspruch 9, bei dem die Aktualisierung mittels Zeitstempel über eine Kaskade zusammenhängender Teilprojekte (TP1, TP2, TPx) hinweg vorgesehen ist.

11. System nach einem der Ansprüche 1 bis 8, bei dem die Beschreibungsdaten als globale Variablen ausgebildet sind und durch die zweite Projektierumgebung (2) nicht veränderbar sind.

12. Verfahren zum Austausch von anwendungsorientierten Beschreibungsdaten zwischen Projekten, insbesondere zwischen Engineering-Projekten im Automatisierungsumfeld, bei dem
• ein erstes Teilprojekt (TP1) in einer ersten Projektierumgebung (1) erstellt wird,
• mindestens eine zweites Teilprojekt (TP2) in mindestens einer zweiten Projektierumgebung (2) erstellt wird,
• für die mindestens zwei Teilprojekte (TP1, TP2) relevante Beschreibungsdaten gespeichert werden, wobei die erste Projektierumgebung (1) die Beschreibungsdaten speichert und die zweite Projektierumgebung (2) die gespeicherten Beschreibungsdaten ausliest.

13. Verfahren nach Anspruch 12, bei dem die Beschreibungsdaten Attribute mindestens eines Objekts sind, wobei die relevanten Beschreibungsdaten ausgewählt werden.

14. Verfahren nach Anspruch 12 oder 13, bei dem die erste Projektierumgebung (1) die relevanten Beschreibungsdaten in Speichermittel (3) exportiert und/oder bei dem die zweite Projektierumgebung (2) die relevanten Beschreibungsdaten aus den Speichermitteln (3) importiert.

15. Verfahren nach einem der Ansprüche 12 bis 14, bei dem die relevanten Beschreibungsdaten eine Identität haben und nachverfolgt werden können.

16. Verfahren nach einem der Ansprüche 12 bis 15 , bei dem die Beschreibungsdaten in einer Datei gespeichert werden, wobei die Datei auf einer Diskette und/oder einem USB-Stick gespeichert wird.

17. Verfahren nach einem der Ansprüche 12 bis 16, bei dem die importierten Beschreibungsdaten in der zweiten Projektierumgebung (2) insbesondere in Form einer Baumstruktur angezeigt werden.

18. Verfahren nach einem der Ansprüche 12 bis 17, bei dem Tags, Alarme, Funktionsblock-Schnittstellen, Netzadressen und/oder Projekt-Strukturen als Parameter übergeben werden wobei die Beschreibungsdaten durch eine physikalische Adresse und/oder einen symbolischen Namen und/oder Attribute beschrieben werden.

19. Verfahren nach einem der Ansprüche 12 bis 18, bei dem relevante Beschreibungsdaten für weitere Teilprojekte (TPx) aus dem ersten Teilprojekt (TP1), dem zweiten Teilprojekt (TP2) und/oder aus jedem weiteren Teilprojekt (TPx) gespeichert werden.

20. Verfahren nach einem der Ansprüche 12 bis 19, bei dem dem die Beschreibungsdaten auf Basis der Identität aktualisiert werden.

21. Verfahren nach einem der Ansprüche 12 bis 20, bei dem die beschreibungsdaten über eine Kaskade zusammenhängender Teilprojekte (TP1, TP2, TPx) hinweg mittels Zeitstempel aktualisiert werden.

22. Verfahren nach einem der Ansprüche 12 bis 19, bei dem die Beschreibungsdaten globale Variablen sind und durch die zweite Projektierumgebung (2) nicht verändert werden.
